Europäisches Patentamt

(19) European Patent Office

Office européen des brevets

(11) EP 0 856 824 B1

(12) EUROPEAN PATENT SPECIFICATION

(45) Date of publication and mention
of the grant of the patent:
**30.08.2000 Bulletin 2000/35**

(51) Int Cl.$^7$: **G01G 19/42**, G07F 9/02,
G07F 17/32, G07F 9/08

(21) Application number: **98105766.4**

(22) Date of filing: **26.03.1996**

(54) **Calibrating a gaming machine with a weighing hopper**

Eichen eines Spielautomaten mit Waagenbehälter

Etalonnage d'une machine à sous avec un récipient balance

(84) Designated Contracting States:
**AT BE CH DE DK ES FI FR GB GR IE IT LI LU MC
NL PT SE**
Designated Extension States:
**AL LT LV SI**

(30) Priority: **31.03.1995 US 414238
16.10.1995 US 5312
16.01.1996 US 586513**

(43) Date of publication of application:
**05.08.1998 Bulletin 1998/32**

(62) Document number(s) of the earlier application(s) in
accordance with Art. 76 EPC:
**96911417.2 / 0 767 898**

(73) Proprietor: **SPINTEKNOLOGY INC.
Las Vegas, NV 89119 (US)**

(72) Inventors:
• **Coulter, Gary L.
Las Vegas, Nevada 89113 (US)**
• **Filiberti, Peter
Las Vegas, NV 89103 (US)**

(74) Representative: **Hotz, Klaus, Dipl.-El.-Ing./ETH
Patentanwalt
c/o OK pat AG
Hinterbergstrasse 36
Postfach 5254
6330 Cham (CH)**

(56) References cited:
**EP-A- 0 625 364          GB-A- 1 512 399
GB-A- 2 221 315          GB-A- 2 272 383
US-A- 4 157 738**

**Description**

The present invention relates to a method of operating a gaming machine of the type having a hopper used to collect and distribute coins in gaming and eventually vending. More particularly, the present invention relates to a method wherein an operator is alerted when the coin hopper needs preventive filling and automatic inventory of coins in the coin hopper may be performed.

*BACKGROUND OF THE INVENTION*

Prior art systems found in many casinos subject to continuous (24 hour a day, seven day a week) operation have the disadvantage that they must be taken out of service to refill hoppers when the hoppers run low on coins. Machines might also be taken out of service to unload coins when the hoppers are overflowing or to perform any necessary periodic accounting. In some jurisdictions, the coin inventory in each machine must be taken at regular intervals. Because the revenue generated by a machine is related to the amount of time it is being played, taking a machine out of service when it is being played, especially when the current player is on a "hot streak", results in loss of revenue.

Another problem with previous slot machines is that because casinos deal with large amounts of cash, they are subject to theft by dishonest persons and are particularly vulnerable to theft by dishonest employees. If so inclined, a dishonest technician can take a few coins from each casino slot machine as it is serviced. Although the take over time and over many technicians can be quite large, since each individual take is so small, casinos have resigned themselves to being shorted and treat the thefts as a cost of doing business. Casinos have tried to combat this problem by assigning two or more technicians to each task requiring an open gaming machine. However, this leads to additional labor costs and doesn't help if each of the assigned technicians is dishonest.

An alternate solution is to seal the coin or bill reservoir so that only trusted money-handling employees working in a cashier's cage can get to the coins or bills. Coin acceptors are more difficult to seal than bill acceptors because coin acceptors have to give out coins as well as receive them, whereas bill acceptors simply store the bills, and because coins are more likely to jam a hopper than pliable bills. If jamming was not a concern, then the hoppers could be sealed. However, where jamming is a possibility, sealing the hoppers might result in greater down-time for the gaming machines, which is a loss to the casinos which can be greater than the theft loss.

The hopper must be occasionally opened to refill with coins after a jackpot is hit and thus is not readily amenable to being sealed. Even if the hopper were sealed, it would not prevent a coin loader from removing some coins from the load of coins being added to the hopper.

As should be apparent after reading the above, merely counting coins as they go into the hopper and counting coins as they leave the hopper would not prevent theft, as a physical inventory would only indicate that coins are missing, not who took them.

Prior art systems exist for weighing coins to count the coins, and many such devices might be used in a money room of a casino. For example *U.S. Patent No 5,193,629* and *U.S. Patent No. 4,512,428* describe apparatus for weighing coins. While such weighing devices might be suitable for weighing coins in a money room, it is unsuitable in a gaming machine environment, where the hoppers must be enclosed to prevent theft by players, as well as being remotely accessible, operable in an electrically noisy and vibration-prone environment and able to detect theft at the time of the theft.

*International Patent Application WO-A1-96/30730* discloses a gaming machine with a coin hopper but without an elaborated possibility to prevent coin theft.

*U. S. Patent No. 4,157,738* discloses a method for determining a number of articles by weighing one article or a standard number of articles and by calculating then a mean weight, before a unknown number of articles is weighed and their number is then calculated. The method intends to prevent miscalculations due to weight differences between the articles.

From the above it is seen that an improved method needed.

The method in accordance with the present inventioned is defined by the features of claim 1, while preferred embodiments are defined by claims **2 to 4.**

*SUMMARY OF THE INVENTION*

The present invention providesaethod using a weighing apparatus for weighing coins accumulated in a coin hopper using a load cell and automatically taking a periodic readings of the number of coins accumulated in the hopper. By periodically monitoring the hopper and automatically calculating the number of coins in the hopper, the need for preventive fills can be easily and timely detected.

In one application of a coin hopper according to the present invention, each machine having such a coin hopper is coupled to an electronic data collection network, which provides coin counts for a plurality of machines at a centralized location. Preferably, a human or computer program monitors coin levels in the plurality of machines to allow for simple and quick accounting of coin inventories, thereby allowing a casino to easily and quickly comply with regulatory requirements and the casino's business accounting requirements.

Additionally, the central monitoring system allows for "preemptive fills" where the monitor is alerted to machines which have hoppers low on coins and are not being played. Using preemptive fills, hoppers can be filled without interfering with customers' desires to play the machines. Preemptive fills can besignalled at a central location using the network or can be signalled at each individual machine, in which case a visual inspection of the machine may be all that is required to determine if the machine is in play.

A further understanding of the nature and advantages of the inventions herein may be realized by reference to the remaining portions of the specification and the attached drawings.

*BRIEF DESCRIPTION OF THE DRAWINGS*

**FIG. 1** is a front view of a slot machine with its door open showing a coin hopper.

**FIG. 2** is a more detailed side view of the coin hopper shown in **FIG. 1** illustrating the cantilevered mounting of the hopper on the load cell

**FIG. 3** is a schematic diagram of the electronics of the coin hopper and accounting system shown in **FIG. 2**.

**FIG. 4** is a flowchart of an accounting process for accounting for coins in a coin hopper such that theft is timely detected.

**FIG. 5** is a flowchart of a process for automatically taking periodic measurements to determine a coin count of coins in the hopper.

**FIG. 6** is a flowchart of a process for calibrating a hopper's tare weight and a per coin weight.

**FIG. 7** is a flowchart of a process for obtaining an accurate hopper weight during calibration in the presence of noise and/or vibrations.

**FIG. 8** is a flowchart of a process for obtaining an accurate coin count in the presence of noise and/or vibrations.

*DESCRIPTION OF THE PREFERRED EMBODIMENTS*

The preferred embodiments described below allow for the coins in the coin hopper to be counted electronically by weight. This allows for automatic inventorying of the coins, theft detection and allows for preemptive fills. If a gaming machine's hopper runs empty, there will likely be a player at the machine having just won a payout. Consequently, the player may be on a "hot streak" and want to keep playing that particular machine. If the casino must take the machine out of service to refill the hopper, this results in lost operating time (which often translates into lost revenue for the casino), additional labor costs, and possibly the loss of the current customer playing the machine. For these and other reasons, the hopper provides a "preemptive fill" signal or a count/weight which allows a game controller to generate the preemptive fill signal. The signal is asserted automatically when a hopper is running low on coins.

In a specific embodiment, when a condition is detected where a hopper has less than a threshold number of coins and the machine is inactive (i.e., no player is at the machine), a monitor is alerted to the event. If the alert is a local alert, a technician noticing the alert at an inactive machine will fill the hopper. If the alert is a central alert and the inactivity of the machine is detected, a technician will be dispatched to the machine to fill the hopper while the machine is not being played and before the hopper runs out of coins.

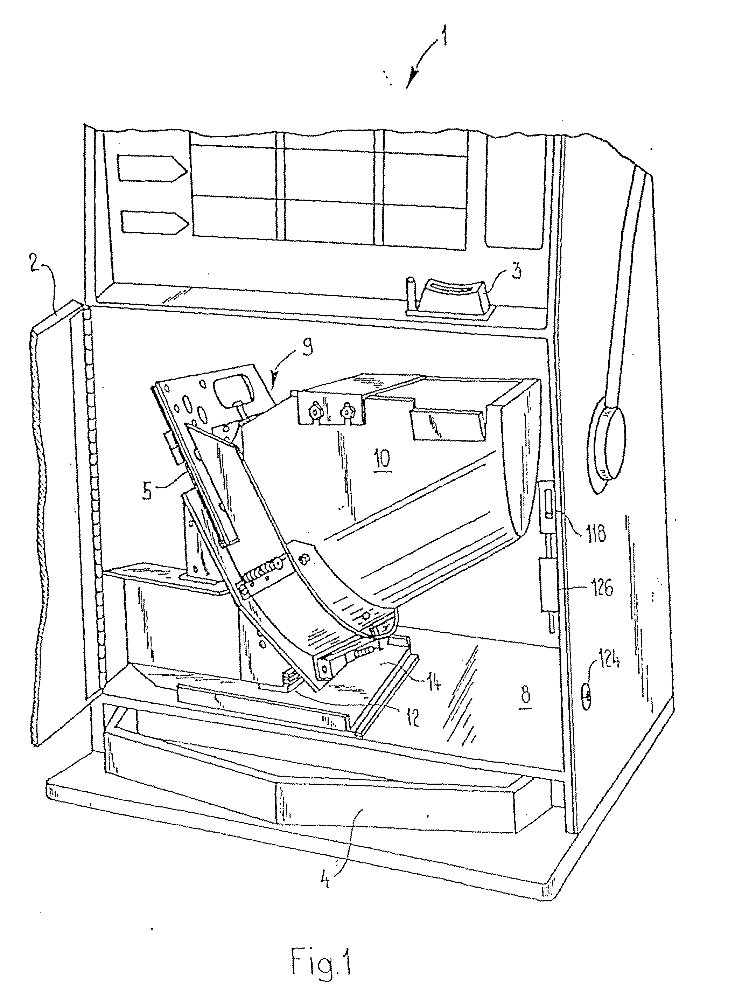

**FIG. 1** illustrates how a coin hopper **10** is often mounted in a slot machine **1**. To show the placement of the hopper, a hopper door **2** of slot machine **1** has been opened. During operation, the hopper door **2** would usually be locked shut to prevent theft of coins by players. As shown here, hopper **10** is often placed below a coin insertion slot **3** and above a coin payout tray **4**. To initiate play of a game, a player would insert one or more coins into coin insertion slot **3** and those coins would drop into hopper **10**. Although not shown in **FIG. 1**, the coins would typically pass through a coin handling unit on their way to hopper **10**, where the coin handling unit performs tests (size, weight, angular moment, etc.) to determine if the coin is real and of the proper denomination. The coin handling unit, or other device, would provide a signal, such as an electric "coin in" pulse, to a logic board to signal that a valid coin has been inserted. If a game is a winning game, or the player cashes out his or her credits with slot machine **1**, hopper **10** ejects the correct amount of coins from ejection slot **5** into payout tray **4**. In some embodiments, such as so-called "slant-top" slot machines, the hopper is actually located below the payout tray and an "elevator" or "escalator" mechanism is used to raise the paid out coins higher than the payout tray so that the coins will fall into the payout tray, and thus be accessible to the player.

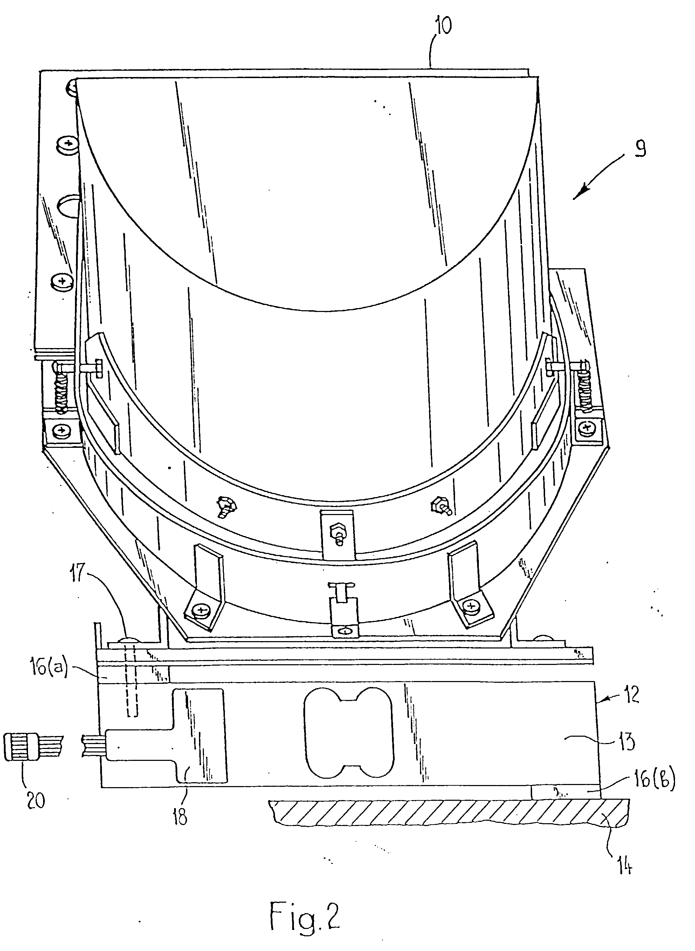

Typically, a motorized conveyor assembly (not shown) of hopper **10** causes coins to be ejected to the payout tray or elevator and that conveyor assembly runs until a "coin out" counter signals that the correct number of coins have been ejected. Thus, thefts can be detected by taking an initial manual inventory of the coins in hopper **10**, then tracking the "coin in" and "coin out" pulses and taking a closing inventory. However, this process requires two manual inventory steps, does not detect who took the missing coins or when, and doesn't account for coins which are misfed into or out of hopper **10** and fall into other areas inside slot machine **1**, such as area **8**. To solve these problems, an electronic weight sensor, specifically a load cell **12**, is provided as shown in **FIG. 2**.

**FIG. 2** illustrates the mounting of hopper **10** onto a base **14** of slot machine **1** using load cell **12** and cantilever spacers **16**. Hopper **10** and the coins therein are totally supported by cantilever spacer **16(a)**, which is in turn totally supported by load cell **12**, which is turn totally supported by cantilever spacer **16(b)** mounted directly to base **14**. Thus, the weight of the hopper and the coins therein is applied to load cell **12** causing a strain on load cell **12** which is a function of the weight of the hopper and coins therein. That strain is measured by a strain gauge **18** and the strain can be measured by reading electrical signals on the lines of cabling **20**.

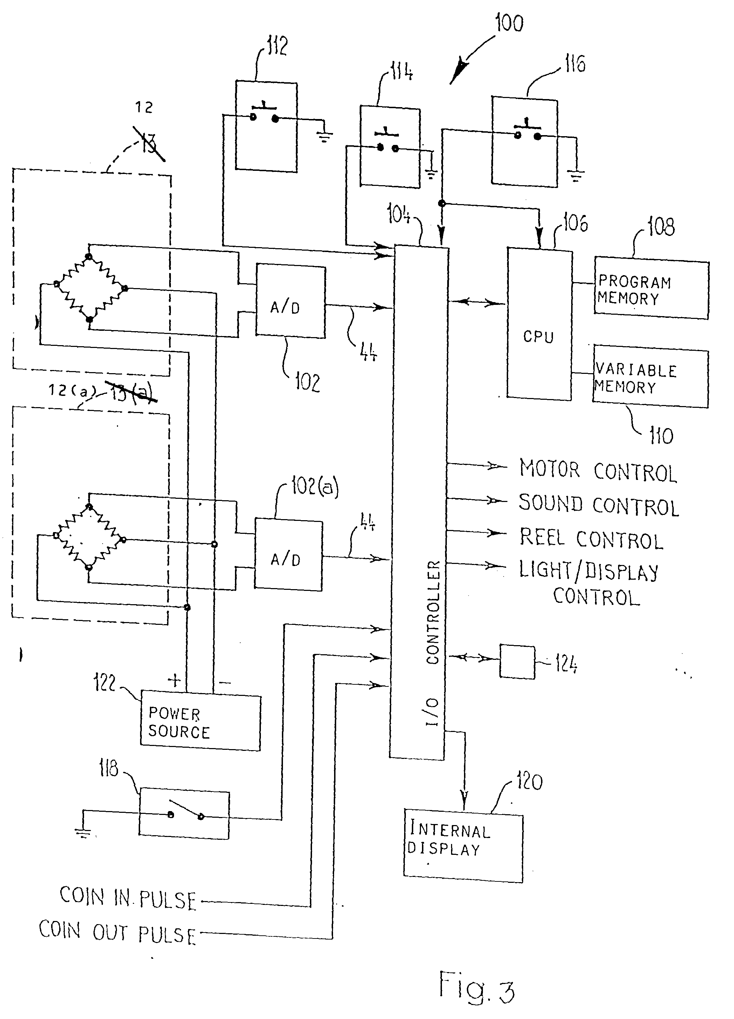

Referring now to **FIG. 3**, a schematic of a logic board **100** used in an embodiment of the present invention is shown. In an alternative embodiment, the role of the logic board is subsumed into a central slot machine control system. The logic board comprises an analog-to-digital converter (ADC) **102** coupled to load cell **12** to convert a load signal from an analog signal to a digital load cell sample. As shown, the digital load cell sample has a resolution of 14 bits (hence the 14 signal lines carrying the signal in parallel), but other resolution A/D converters can also be used. With 14 bits, an integer corresponding to the digital load cell sample can range from 0 to 16,383. With proper calibration and proper selection of load cell **12**, a fully loaded hopper will cause a reading near the top end of the range, so as to have the best resolution.

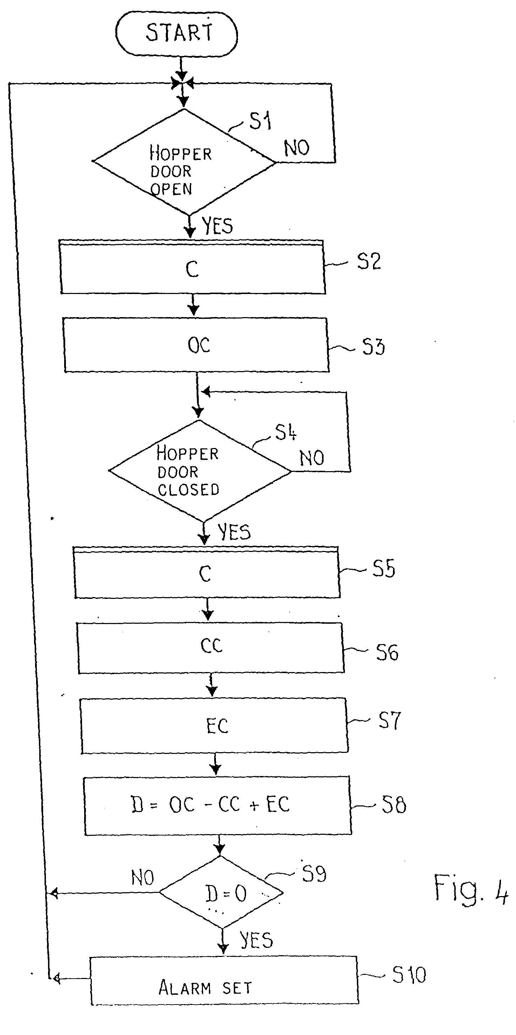

ADC **102** provides its output to an input-output (I/O) controller **104** which in turn provides samples, as requested, to a central processing unit (CPU) **106**. CPU **106** executes programs stored in program memory **108** and uses a variable memory **110** to store data incident to the execution of those programs. The programs executed by CPU **106** comprise instructions for following the processes described in **FIGS. 4-8**, however CPU **106** might also execute other programs not described herein. In some embodiments, a CPU with built-in I/O control functions and/or memory might be used, however the description of **FIG. 3** still applies to such integrated systems.

**FIG. 3** shows a number of I/O signals being provided to, or by, I/O controller **104**. For example, "Coin In" and "Coin Out" signals are provided from coin handling devices. These signals can be pulses (one pulse per coin) or can be other signals indicating a count, as are well known in the art. I/O controller **104** might also provide motor, sound, reel, lights and display control signals, if CPU **106** or I/O controller **104** are programmed to handle such functions of slot machine **1**. I/O controller **104** receives switch signals from a variety of sources, of which a calibration switch **112**, a start switch **114**, a reset switch **116** and a door switch **118** are shown. FIG. **3** also shows an internal display **120** which is used as explained below.

Also shown in FIG. **3** is a drop box load cell **12(a)** and an ADC **102(a)** coupled to I/O controller **104**. Drop box load cell **12(a)** performs a function similar to load cell **12**, in that it provides an indication of the weight of a drop box (not shown) and the coins therein. A drop box is a standard part of some slot machines, and is used to contain the overflow of coins from a hopper. For example, in **FIG. 1**, a drop box might have been installed below hopper **10**. A drop box is similar to a hopper, in that it holds a collection of coins, but differs from a hopper in that coins are not ejected from the drop box. If a drop box is used, a hopper may have a sensor which detects when the hopper is full (or could use the present invention to determine if more than a threshold number of coins are in the hopper), and ejects coins in such as way that the ejected coins fall into the drop box instead of into payout tray **4**. Of course, load cell **12(a)** and ADC **102(a)** are not needed where coin accounting for drop box coins is done separately or the drop box is not used.

I/O controller **104** also reads/writes data from a data pin **124** (see **FIG. 1**) as explained below. In a preferred embodiment, data pin **124** is part of a communication system manufactured by Dallas Semiconductor. A data wand (not shown) is a hand-held, battery-powered device with an internal computer which communicates with I/O controller **104** through a single signal line and chassis ground connection.

In operation, load cells **12**, **12(a)** are provided with load cell power from a load cell power source **122** and generate an analog voltage which is a function of their load, which analog voltage is input to the load cell's ADC **102** or **102(a)**. In operation, the states of the various switches shown in **FIG. 3** are monitored, as explained in connection with **FIG. 4**.

**FIG. 4** is a flowchart of a process for timely detecting unauthorized coin removal as performed by CPU **106** according to instructions stored in program memory **108**. Each step in **FIGS. 4-8** is numbered with a step number and the step numbers within each figure follow in sequential order of execution of the steps, except where noted.

The process shown in **FIG. 4** begins when hopper door **2** (see **FIG. 1**) is opened (**S1**). This process assumes that the primary mode of coin theft is from dishonest technicians or other casino employees opening slot machine door **2** to perform actual or purported maintenance and taking coins from hopper **10** while hopper door **2** is open. Presumably, a game cannot be played and a payout cannot be made while door **2** is open and therefore a coin count should not change except in cases of authorized coin withdrawal. In a preferred embodiment, hopper door **2** is secured by an electronic switch, such as a solenoid **126** (see **FIG. 1**), which can only be activated by the technician or employee touching their assigned data wand to data pin **124**. As part of the opening process, CPU **106** records an employee ID communicated from the data wand before activating solenoid **126** to open hopper door **2**. Alternatively, hopper door **2** can be opened by an ordinary key and the door opening can be detected by door switch **118**. In either case, a preferred embodiment records the time of opening.

When hopper door **2** is being opened, or preferably just before access is granted or hopper door **2** moves, a coin count is obtained (**S2**) and the count is stored (**S3**) as the opening count (OC). If CPU **106** makes continuous, periodic readings, then the opening count might just be the most recent periodic reading before hopper door **2** was opened and after the last game was played.

At step **S4**, the door is monitored until it is closed, and another coin count is taken (**S5**). In a preferred embodiment, this second coin count is a reading taken after slot machine **1** has stabilized following the closing of the door. This coin count, C, is stored (**S6**) as the closing count (CC). Next (**S7**), an expected change count (EC) is determined. This expected change count is positive in the case where a technician is sent to a slot machine to add coins to a depleted hopper, is negative where the technician is sent to the slot machine to remove coins, and is zero where the technician is sent to the slot machine simply to perform maintenance. Of course, other variations of this scheme are also possible. For example, the expected change count might not be known at the time the coins are removed, but later determined after the technician turns over the coins removed from the slot machine.

If the expected change count is known at the time the door is closed, a deficiency can be easily calculated (**S8**), by subtracting the closing count (CC) from the opening count (OC) and adding the expected change count (EC). If the resulting deficiency (D) is not equal to zero (**S9**), then an alarm can be set (**S10**). Where the slot machine does not automatically determine the identification of the technician or other employee opening the slot machine, the setting of an alarm might result in a flashing light on the slot machine being immediately activated, so that the unauthorized removal of coins can be detected by a floor manager while the thief is still present at the machine. However, in a preferred embodiment, the slot machine detects the time of opening and closing as well as the identification of the person opening the machine, thereby allowing the deficiency to be easily traced to a specific employee. In an alternate embodiment, where the slot machine is not able to determine the identity of the person opening the slot machine, the slot machine will merely record the time of entry and the deficiency for later comparison to a log kept elsewhere showing which employees had access to which slot machines at which times. In a preferred embodiment, the alarm is not merely a local alarm in the form of a flashing light on the slot machine or the like, but is an alarm which is recorded by CPU **106** and is communicated to a central security station (not shown). Regardless of whether an alarm is set or not, the flow of the process returns to step **S1**, where it remains until the hopper door is again opened.

In a preferred embodiment, the slot machine activity is communicated to a central security station for easy monitoring and prompt detection of deficiencies. The automatic coin accounting process of **FIG. 4** is a process which can be run independently of the coin counting processes shown elsewhere. The use of the present invention to handle other modes of theft or coin accounting should be apparent after reading this present description.

For example, the central security station can monitor the number of coins in each hopper of each slot machine coupled to the central security station to provide instantaneous accounting of the number of coins in a particular hopper or the number of coins present in all hoppers on an entire casino floor. This saves the casino from having to do labor-intensive physical inventories at each individual machine and avoids the need to interrupt a player's play where the casino is in continuous operation. As a further advantage, the use of central monitoring reduces the average down time for a machine by alerting the casino to the need for preemptive fill.

In one embodiment, a central station monitors coin levels in each slot machine and also monitors which slot machines are actively being played and which slot machines are inactive. If it is noted that a slot machine hopper is running low on coins and the slot machine is not being played at the time, a technician can be dispatched to add more coins to the hopper during this down time, without interfering with any player's desire to play a particular machine. This can be important in casinos which are in continuous operation and whose casino floor revenues are a function of the total amount of time each machine is played. Preemptive fills can also be important to the players. If a player feels that a particular machine is "hot" and the player consequently decides to continue playing the machine, the casino does not want to interfere with the player's play. However, when a machine is actually running "hot" and paying out successive wins, that is the point at which it is most likely to run low on coins. Of course, should a player win more than the number of coins available, a casino would pay the player from some other source of coins or bills, such as a cashier's cage. In general, casinos prefer to avoid such situations because they involve greater labor costs and interrupt the player's flow of game play.

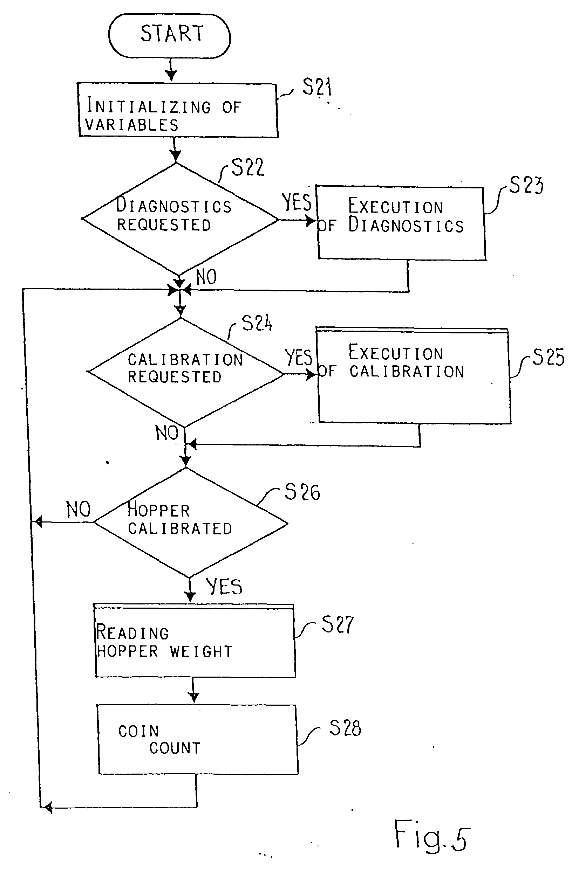

While **FIG. 4** shows a process of deficiency detection, **FIG. 5** shows a more general process of taking a reading to calculate coin count C. In a preferred embodiment, the processes of **FIG. 4** and the processes of **FIG. 5** run asynchronously, with the process shown in **FIG. 5** being a process of periodically taking a reading to update the current coin count and storing a new coin count whenever it is determined that a stable and reliable reading has been taken, while the process shown in **FIG. 4** (more specifically steps **S2** and **S5**) merely refers to the stored coin count value for the latest reliable coin count.

Referring now to **FIG. 5**, the process shown therein begins with an initialization of the variables used (**S21**). At this point, the operator is prompted with "START" or a similar prompt, prompting the operator to begin the calibration process. The prompt is displayed, in some embodiments, on a computer terminal, while in other embodiments it is displayed on an LED display **120** coupled to I/O controller **104** (see **FIG. 3**). Preferably, the operator first determines that the hopper and slot machine are stable and the hopper is empty.

At step **S22**, CPU **106** (see **FIG. 3**) determines whether diagnostics were requested by the operator.

One embodiment, the operator signals that diagnostics are requested by sending a predetermined signal from a terminal to I/O controller **104** such as through the data pin I/O or by simultaneously pressing calibration button **112** and start button **114** (see **FIG. 3**). If diagnostics are requested, CPU **106** executes those diagnostics (**S23**) and proceeds to step **S24**. Otherwise, if diagnostics are not requested, CPU **106** proceeds directly to step **S24**.

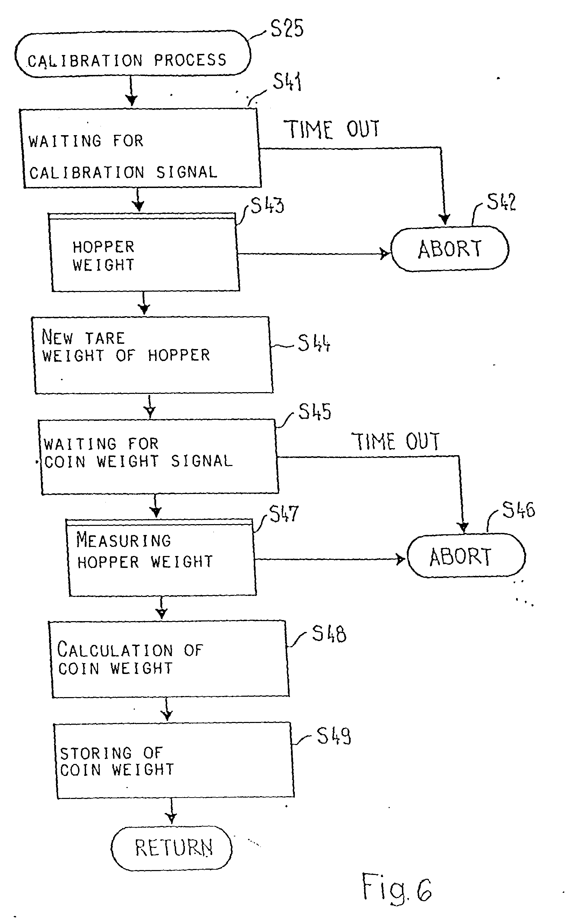

At step **S24**, CPU **106** checks to see if the operator has requested a calibration. In the embodiment shown in **FIG. 3**, the operator requests calibration by pressing calibration button **112**. If calibration is requested, the calibration process is executed (**S25**) to determine a tare weight (TW) and a per coin weight (CW). Following the calibration step, which is described in further detail in **FIG. 6**, or if calibration is not requested, CPU **106** proceeds to step **S26**, where it determines whether or not the hopper was calibrated. If the hopper was not calibrated, either because calibration was not requested or because the calibration step was not successful due to unreliable readings, CPU **106** returns to step **S24**, thus creating a loop that is only exited when the hopper is finally calibrated.

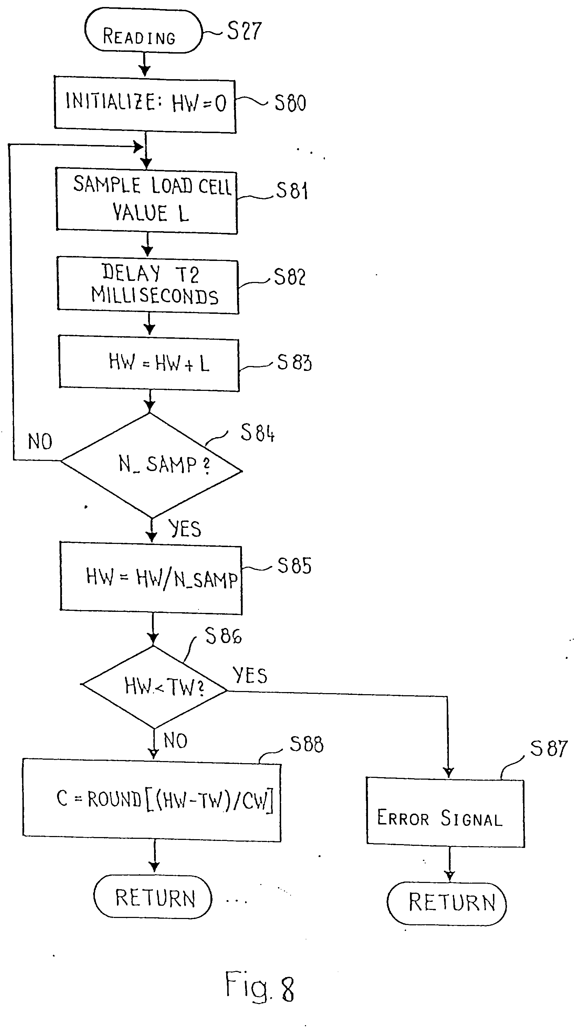

When the loop is exited, CPU **106** proceeds to step **S27**, where a reading of the hopper weight is taken and a coin count is calculated. This process is shown in further detail in **FIG. 8**. Once a reliable coin count is obtained (**S28**), that coin count is displayed, transmitted to a remote storage and/or display device or the coin count is simply stored in variable memory **110** (see **FIG. 3**), for later provision of a coin count value to other processes which use the coin count. Once the coin count is obtained and processed as described above, CPU **106** returns to step **S24**. Thus, while the hopper remains calibrated, CPU **106** executes a periodic loop of taking a reading, calculating a coin count, and providing the coin count to various display or memory devices as needed. In a preferred embodiment, a latest reliable value for the coin count is retained and is not overwritten by any subsequent unreliable coin counts, thereby providing a reliable coin count value which can be polled at any time by asynchronous processes.

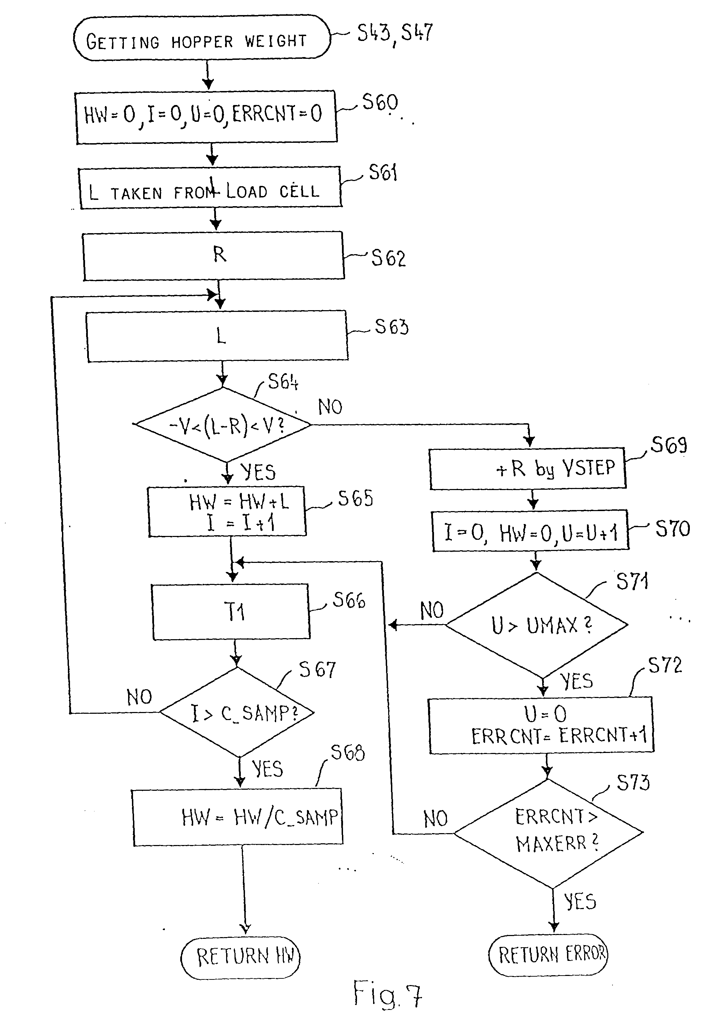

**FIG. 6** shows the calibration process of step **S25** in further detail. At the outset of the calibration process, CPU **106** waits (**S41**) for a calibration signal, either from a remote device or from the operator pressing calibration switch **112**. If the calibration signal is not received within a predetermined time, the calibration process is aborted and an indication that calibration did not complete is given so that readings (see **FIG. 5**) will not be taken until the calibration process actually successfully completes. If the calibration signal is received, CPU **106** proceeds to obtain the hopper weight (**S42**), which is described in further detail in FIG. **7**. Prior to receipt of the calibration signal, the hopper should have been emptied by the operator so that a tare weight of the hopper can be obtained. Also, if the calibration signal is sent using calibration switch **112**, CPU **106** delays for a predetermined time to allow for dampening of slot machine vibrations due to calibration switch **112** being pressed. If the hopper weighing process returns an error indicating that a reliable hopper weight cannot be obtained, CPU **106** aborts the calibration process (**S42**). However, if a reliable hopper weight is obtained, that hopper weight is stored as the new tare weight (TW) value for the hopper (**S44**).

Once the hopper tare weight is obtained, CPU **106** waits for a COIN WEIGHT signal (**S45**), and when the COIN WEIGHT signal is received, CPU **106** again measures the hopper weight (**S47**). Before the COIN WEIGHT signal is sent, the process expects that the hopper now contains N coins. In a preferred embodiment, N=20, however it should be apparent that other values of N could be used. If a time out occurs while waiting for the COIN WEIGHT signal or the hopper weighing process returns an error, the calibration process is aborted (**S46**) and only the tare weight is updated. Where a hopper is modified or moved to a different slot machine, the calibration procedure could be allowed to abort at step **S46**, without ill effects, since the prior per coin weight can be reused.

Once the hopper weight is obtained (**S47**) for the hopper and the N coins, a coin weight is calculated (S**48**) by subtracting the hopper tare weight (TW) from the just measured hopper weight (HW) and dividing the difference by N. This new per coin weight (CW) is then stored (**S49**) in variable memory **110** and the calibration process returns indicating a successful hopper calibration.

**FIG. 7** shows the process of getting a hopper weight, the result being either returning successfully with a hopper weight (HW) or returning an error indicating that the hopper was too unstable for a measurement to have been taken.

At the beginning of the process, the variables used for temporary storage and loop control are initialized (**S60**) and a sampled digital value, L, is taken from load cell **12** (**S61**). As should be apparent from this description, the processes of **FIGS. 4-8** are equally applicable to coin accounting using a drop box, with the main difference being that load cell **12(a)** is sampled instead of load cell **12**. The sampled value L is stored as a reference reading R (**S62**), and a main loop is entered.

In the main loop, the load cell is again sampled (**S63**) to obtain a new value for L. If the absolute value of the difference between L and the reference reading R is less than a variance limit, V, then the sampled value L is added to an accumulator (HW) and a loop counter (I) is incremented (**S65**). CPU **106** then pauses for a predetermined delay period of T**1** ms (**S66**) and then loops back to step **S63** to take another reading. This continues until a predetermined number, C_SAMP of readings has been taken. Once C_SAMP samples have been taken and accumulated, the value in the accumulator (HW) is divided by C_SAMP (**S68**), to yield a hopper weight. In a preferred embodiment, the digital values L and R are integers ranging from zero to 16,383, the variance threshold V is 120, T1 is 100 ms and C_SAMP=40.

If the absolute value of the difference between L and R is greater than or equal to V, indicating too much variance between a sampled weight and a reference weight, the reference weight is adjusted by an increment VSTEP (**S69**). More specifically, R is adjusted so that the absolute value of the difference between L and R is reduced by VSTEP, i.e., if R is greater than L by more than V, R is reduced by VSTEP and if R is less than L by more than V, R is increased by VSTEP. In a preferred embodiment, VSTEP=10.

Following the adjustment of R, the loop counter (I) and the accumulator (HW) are zeroed (**S70**) and an unstable reading counter, U, is incremented. If the unstable reading counter U is not greater than a maximum UMAX, then CPU **106** reenters the main loop just before step **S66**. Otherwise, if U is greater than UMAX, U is reset to zero and an error count (ERRCNT) is incremented (**S72**). If the error count is greater than a maximum error value (ERRCNT > MAXERR), the hopper weight process ends and an error indication is returned. Otherwise, CPU **106** reenters the main loop just before step **S66**. In a preferred embodiment, UMAX=40 and MAXERR=4. Also, in a preferred embodiment, as instability is detected, the operator is provided with an indication, such as a display "UNST", to indicate that instability is being detected, thereby giving the operator the opportunity to eliminate the source of instability while a reading is being taken. Assuming a valid hopper weight reading is obtained, this can be used in the calibration process shown in **FIG. 6**.

**FIG. 8** shows the process of taking a reading, which results in either a coin count C being returned or an error indication being returned. At the outset of this process an accumulator (HW) and a loop counter (not shown) are initialized. In the main loop (shown as steps **S81**, **S82**, **S83**) a load cell is sampled to obtain a value L, CPU **106** delays for T2 ms, and the sampled value L is added to the accumulator (HW). This loop repeats until N_SAMP samples are taken. In a preferred embodiment, T2 is 200 ms and N_SAMP=30.

Once N_SAMP samples are taken, the accumulator (HW) is divided by N_SAMP (**S85**) and the resultant hopper weight (HW) is compared to the hopper tare weight (**S86**). If the hopper weight HW is less than the tare weight TW, an error signal is generated (**S87**), otherwise a coin count C is calculated according to the formula:

$$C=ROUND((HW - TW) / CW).$$

Of course, other suitable formulae can be used. The hopper weight reading process of **FIG. 8** is less interactive and less error-correcting than the hopper-weight reading process of **FIG. 3**, since the former generally occurs when the slot machine is not open and an unreliable reading can be discarded without ill effects, whereas the latter process provides tare weight and per coin weights which cannot be as easily discarded.

In summary, a gaming machine with a hopper and a weighing mechanism have been described. The weighing mechanism weighs the coins in the coin hopper and performs a set of calculations to arrive at a value for the number of coins in the hopper. As this weighing mechanism is an electronic system, the coin count can be communicated to a computer, such as a microprocessor, in the slot machine as well as being communicated to a central casino monitoring and security system to effect preventive fills and automatic inventorying. The handling of preventive fills can take many forms. If a casino already has a centralized dispatch procedure for dispatching technicians, then central notification of preventive fill alerts (from machines detecting low coin counts/weights) might be preferred. Where the slot machines are not already wired to a network and wiring is problematic, the preventive fill alerts can be sent by wireless link to a central monitor. Where dispatch is not centralized, a light on the slot machine "light tower" or a small LED might be lit at a machine needing a preventive fill. Preferably, the indicator is unobtrusive enough not to be noticed by a customer, but is noticeable to a technician. That way, a technician can make his or her rounds, looking for preventive fill indicators. When one is found, and the machine is inactive, the technician fills the machine on the spot.

Another use of such hoppers in gaming machines is to detect technician fraud wherein a technician removes an unauthorized number of coins while servicing a slot machine. This type of fraud can be detected by weighing the hopper and thus determining the number of coins in the hopper just before a slot machine door is opened for servicing, and repeating the process once the door is closed following the servicing. Taking into account expected additions of coins into the gaming machine and authorized withdrawals of coins from the gaming machine, a discrepancy, or theft amount, can be detected if present. The discrepancy can be noted by a microprocessor within the gaming machine and used to trigger an alarm. The discrepancy can also be reported to the central monitoring and security station which may include a central alarm and/or other triggers to initiate an action to stem the theft of coins. Where the key or other device used to gain entry to a slot machine is specific to a particular technician, the slot machine might also record which key was used for later identification of the individual responsible for the discrepancy. In some embodiments, an electronic key is used for opening the door of the gaming machine and electronic keys are coded for individual technician use.

As explained above, the coin hopper can be used in conjunction with a drop box, where a drop box is a reservoir for coin overflow from the hopper. In order to have a complete accounting of all the coins in the hopper, a weighing mechanism might be employed on the drop box as well as the coin hopper. In some environments, it may be necessary to measure acceleration and/or vibration of the coin hopper relative to the gaming machine so that measurement of the weight of the coin hopper can be deferred until the acceleration and/or vibrations are at acceptable levels.

In a specific embodiment, coins in the coin hopper are weighed at the start of a detection period to form a baseline weight, from which a baseline coin count is calculated. To this baseline coin count, a detected number of inserted coins are added and a detected number of authorized withdrawn coins is subtracted to arrive at an expected coin count. At the end of the detection period, the coins in the hopper are weighed and a final hopper coin count is determined. A discrepancy amount is then determined by subtracting the final coin count from the expected coin count. This discrepancy amount can then be reported as a coin theft amount. If the detection period is coincident with a period in which a technician has access to the gaming machine and the gaming machine has not been played, the coin theft amount can be associated with fraud on the part of the technician. Where the detection period is a period in which the gaming machine is apparently secure and is being played by a player, the discrepancy can be attributed to fraud on the part of the player.

**Claims**

1.  A method of operating a gaming machine with a coin hopper for coins having no essential relative weight differences, the method comprising the steps of:

    -   weighing the empty coin hopper to determine the hopper tare weight,
    -   weighing the hopper with a determined number of coins contained therein to determine a first total weight of the hopper and the determined number of coins contained therein,
    -   calculating the weight of one coin by subtracting the previously determined hopper tare weight from said first total weight and by dividing the resulting coin weight by the determined number of coins,
    -   weighing the hopper with an unknown number of coins to determine a second total weight of the hopper and the unknown number of coins contained therein and calculating a coin count by subtracting said hopper tare weight from said second total weight and by dividing the result by the weight of one coin, and
    -   communicating the gaming machine activity to a central security station for monitoring and detection of deficiencies.

2.  A method in accordance with claim **1**, further comprising the steps of

    -   detecting by an operator whether the gaming machine is stable before performing said weighing, and
    -   performing all weighing only when the gaming machine is stable.

3.  A method in accordance with claim **2**, further comprising the steps of

    -   detecting by an operator whether the coin hopper is depleted, and
    -   adding coins when the coin hopper is depleted and the machine is stable.

4.  A method in accordance with claim **1**, further comprising the steps of

    -   weighing further hoppers comprised in a gaming establishment together with said first mentioned hopper, to determine a plurality of total hopper and coin weights,
    -   calculating a coin count for each of the hoppers using the related weight of said total weights,
    -   monitoring the activity of each of the gaming machines to the central security station, tol a low for automatic inventorying of the total number of coins and of the coins contained in each hopper.

**Patentansprüche**

1.  Verfahren zum Betrieb eines Spielautomaten mit einem Münzbehälter für Münzen ohne wesentliche relative Gewichtsunterschiede, umfassend:

    -   Wiegen des leeren Münzbehälters zur Bestimmung des Behälter-Taragewichts,
    -   Wiegen des Behälters mit einer bestimmten Anzahl von darin enthaltenen Münzen zur Bestimmung eines ersten Gesamtgewichts des Behälters und der darin enthaltenen bestimmten Anzahl von Münzen,
    -   Berechnen des Gewichts einer Münze durch Subtrahieren des zuvor ermittelten Münzbehälter-Taragewichts vom ersten Gesamtgewicht und Dividieren des resultierenden Münzgewichts durch die bestimmte Anzahl von Münzen,
    -   Wiegen des Behälters mit einer unbekannten Anzahl von Münzen zur Bestimmung eines zweiten Gesamtgewichts des Behälters und der unbekannten Anzahl von darin enthaltenen Münzen und Berechnen einer Münzanzahl durch Subtrahieren des Behälter-Taragewichts von dem zweiten Gesamtgewicht und Dividieren des Ergebnisses durch das Gewicht einer Münze, und

- Mitteilung der Spielautomatenaktivität an eine zentrale Sicherheitsstation zur Überwachung und zur Ermittlung von Fehlern.

2. Verfahren gemäß Anspruch **1**, des weiteren umfassend die Schritte

- Feststellen durch eine Bedienperson, ob der Spielautomat vor Ausführung des Wiegevorgangs stabil ist, und
- Durchführen aller Wiegevorgänge nur bei stabilem Spielautomaten.

3. Verfahren gemäß Anspruch **2**, des weiteren umfassend die Schritte

- Feststellen durch eine Bedienperson, ob der Münzbehälter entleert ist, und
- Hinzufügen von Münzen, wenn der Münzbehälter entleert und der Automat stabil ist.

4. Verfahren gemäß Anspruch **1**, des weiteren umfassend die Schritte

- Wiegen weiterer Münzbehälter, die in einer Spielanordnung mit dem ersten Behälter zusammengefasst sind, zur Feststellung einer Mehrzahl von Münzbehälter- und Münzengesamtgewichten,
- Berechnen einer Münzenanzahl für jeden Behälter unter Verwendung des entsprechenden Gewichts der Gesamtgewichte,
- Überwachung der Aktivität jedes Spielautomaten durch die zentrale Sicherheitsstation, um eine automatische Inventarisierung der Gesamtanzahl von Münzen und der Münzen in jedem Behälter zu ermöglichen.

**Revendications**

1. Méthode d'exploitation d'une machine à sous équipée d'une trémie à pièces pour pièces ne présentant pas de différence de masse relative essentielle, la méthode comprenant les étapes consistant à :

- peser la trémie à pièces vide pour déterminer la tare de la trémie,
- peser la trémie avec un nombre déterminé de pièces qu'elle contient pour déterminer une première masse totale de la trémie et le nombre déterminé de pièces qu'elle contient,
- calculer la masse d'une pièce en soustrayant la tare de trémie précédemment déterminée de ladite première masse totale, et en divisant la masse de pièces obtenue par le nombre déterminé de pièces,

- peser la trémie comportant un nombre de pièces inconnu pour déterminer une seconde masse totale de trémie et le nombre inconnu de pièces qu'elle contient, et calculer un compte de pièces en soustrayant ladite tare de trémie de ladite seconde masse totale, et en divisant le résultat par la masse d'une pièce, et
- communiquer l'activité de la machine à sous à une station centrale de sécurité pour surveiller et déceler les manquements.

2. Méthode selon la revendication 1, comprenant en outre les étapes consistant à:

- faire détecter par un opérateur si la machine à sous est stable avant de réaliser ledit pesage, et
- réaliser tous les pesages uniquement lorsque la machine à sous est stable.

3. Méthode selon la revendication 2, comprenant en outre les étapes consistant à :

- faire détecter par un opérateur si la trémie à pièces est épuisée, et
- ajouter des pièces lorsque la trémie à pièces est épuisée et que la machine est stable.

4. Méthode selon la revendication 1, comprenant en outre les étapes consistant à :

- peser d'autres trémies comprises dans un établissement de jeu avec ladite première trémie mentionnée, pour déterminer une pluralité de masses totales de trémie et pièces,
- calculer un compte de pièces pour chacune des trémies en utilisant la masse relative des dites masses totales,
- surveiller l'activité de chacune des machines à sous vers la station centrale de sécurité, pour permettre un inventaire automatique du nombre total de pièces et des pièces contenues dans chacune des dites trémies.

Fig.1

Fig.2

Fig. 3

Fig. 4

Fig.5

S25

CALIBRATION PROCESS

S41

WAITING FOR
CALIBRATION SIGNAL

TIME OUT

S43

HOPPER
WEIGHT

S42

ABORT

S44

NEW TARE
WEIGHT OF HOPPER

S45

WAITING FOR
COIN WEIGHT SIGNAL

TIME OUT

S47

MEASURING
HOPPER WEIGHT

S46

ABORT

S48

CALCULATION OF
COIN WEIGHT

S49

STORING OF
COIN WEIGHT

RETURN

Fig.6

Fig. 7

Fig. 8